# EUROPÄISCHE PATENTSCHRIFT

(11) **EP 2 239 955 B1**
(45) Veröffentlichungstag und Bekanntmachung des Hinweises auf die Patenterteilung: **06.07.2016**
(21) Anmeldenummer: 09159806.0
(22) Anmeldetag: 08.05.2009
(51) Int. Cl.: H04Q 9/00

(54) **Energiegesteuerte Datenübermittlung eines Feldgeräts**
Energy-controlled data transmission of a field device
Transmission de données commandée par l'énergie d'un appareil de terrain

(30) Priorität: 09.04.2009 US 167974 P
(43) Veröffentlichungstag der Anmeldung: 13.10.2010
(73) Patentinhaber: VEGA Grieshaber KG, 77761 Schiltach (DE)
(72) Erfinder: Isenmann, Andreas, 77716, Haslach i.K. (DE); Allgaier, Volker, 77716, Haslach i.K. (DE); Deck, Thomas, 77709 Wolfach (DE); Fehrenbach, Josef, 77716 Haslach (DE)
(74) Vertreter: Maiwald Patentanwalts GmbH

(56) Entgegenhaltungen:
- WO-A-03/034366
- DE-A1-102004 032 618
- US-A1- 2005 099 289

## Beschreibung

Die Erfindung betrifft die Datenübermittlung bei Feldgeräten. Insbesondere betrifft die Erfindung eine Steuereinrichtung für ein Feldgerät zur energiegesteuerten Datenübermittlung an einen externen Empfänger, ein Feldgerät mit einer Steuereinrichtung, ein Verfahren zur energiegesteuerten Datenübermittlung von einem Feldgerät an einen externen Empfänger, ein Programmelement und ein computerlesbares Medium.

### Technologischer Hintergrund

Feldgeräte versenden die von ihnen erfassten Messwerte oft zeitgesteuert, ereignisgesteuert oder messwertgesteuert. Das zeitgesteuerte Versenden eines Messwerts bedeutet, dass das Feldgerät den Messwert entweder in regelmäßigen Abständen oder immer zur gleichen Uhrzeit versendet. Das ereignisgesteuerte Versenden eines Messwerts bedeutet, dass ein Datenversand beim Auftreten eines bestimmten Ereignisses, beispielsweise beim Auftreten eines Fehlerzustandes im Feldgerät erfolgt. Messwertgesteuertes Versenden eines Messwerts bedeutet, dass beispielsweise der entsprechende Messwert immer dann gesendet wird, wenn ein neuer Messwert vorliegt. Auch kann dies bedeuten, dass ein Messwert dann versendet wird, wenn er einen bestimmten Schwellwert über- oder unterschreitet.

Als Kommunikationsmodule können GSM-, GPRS- bzw. UMTS-Modems eingesetzt werden, die für den Versand von Daten allerdings relativ viel Energie benötigen.

Aus diesem Grunde sind derartige Feldgeräte oft an einer Energieversorgung angeschlossen, so dass sichergestellt ist, dass dem Feldgerät zu jedem Zeitpunkt ausreichend Energie zur Verfügung steht.

DE 10 2004 032 618 A1 beschreibt einen Solar-Funk-Temperatursensor, der Solarzellen zur Energieversorgung einer Sendeeinrichtung sowie einen Energiespeicher, welcher über die Solarzellen auffüllbar ist, aufweist. Ein Sendevorgang wird ausgelöst, wenn die Summe der gemessenen Temperaturdifferenzen einen vorgegebenen Wert erreicht hat.

WO 03/034366 A1 beschreibt ein drahtloses Sensorsystem mit einer Solarzelle zur Detektion einer Lichtstärke, eines Kontakts oder einer Lage.

US 2005/0099289 A1 beschreibt einen Sensor mit einer drahtlosen Kommunikationsfunktion. Bei dem Sensor handelt es sich um einen Beschleunigungssensor, einen Wärmesensor oder einen Gassensor.

### Zusammenfassung der Erfindung

Es ist eine Aufgabe der Erfindung, die Flexibilität im Einsatz von Feldgeräten zu erhöhen.

Es sind eine Steuereinrichtung für ein Feldgerät zur energiegesteuerten Datenübermittlung an einen externen Empfänger, ein Feldgerät, ein Verfahren zur energiegesteuerten Datenübermittlung, ein Programmelement und ein computerlesbares Medium gemäß den Merkmalen der unabhängigen Ansprüche angegeben. Weiterbildungen der Erfindung ergeben sich aus den Unteransprüchen.

Die verschiedenen Ausführungsbeispiele betreffen gleichermaßen die Steuereinrichtung, das Feldgerät, das Verfahren, das Programmelement und das computerlesbare Medium. In anderen Worten lassen sich im Folgenden beispielsweise im Hinblick auf die Steuereinheit beschriebenen Merkmale auch in dem Verfahren, dem Programmelement und dem computerlesbaren Medium implementieren, und umgekehrt.

Gemäß einem Ausführungsbeispiel der Erfindung ist eine Steuereinrichtung für ein Feldgerät zur energiegesteuerten Datenübermittlung an einen externen Empfänger angegeben, wobei die Steuereinrichtung zur Überwachung einer von dem Feldgerät gesammelten Energiemenge ausgeführt ist und wobei die Steuereinrichtung zum Triggern der Datenübermittlung ausgeführt ist, nachdem die gesammelte Energiemenge einen vorbestimmten, einstellbaren Schwellwert überschritten hat.

In anderen Worten kann die Steuereinrichtung beispielsweise nachprüfen, ob die im Feldgerät gesammelte Energiemenge ausreicht, eine Datenübermittlung durchzuführen. Hierfür gibt es verschiedene Möglichkeiten: Beispielsweise kann die Steuereinrichtung die im Feldgerät verfügbare, gesammelte Energiemenge regelmäßig messen und eine Datenübermittlung (und eine vorherige Messwerterfassung) freigeben, wenn die gesammelte Energiemenge hierfür ausreicht. Auch ist es möglich, dass die gesammelte Energiemenge nur dann gemessen wird, wenn überhaupt eine Datenübermittlung stattfinden soll. Ist zu diesem Zeitpunkt die gesammelte Energiemenge ausreichend hoch, kann dann die Datenübermittlung stattfinden.

Gemäß einem weiteren Ausführungsbeispiel der Erfindung wird die Datenübermittlung dann getriggert, sobald in dem Feldgerät ausreichend Energie für die Datenübermittlung angesammelt ist.

Ein entsprechender Energiespeicher des Feldgeräts lädt sich also auf und sobald der Ladezustand des Energiespeichers ausreichend hoch ist, erfolgt eine Datenübermittlung des Messwerts bzw. der Messwerte.

Gemäß einem weiteren Ausführungsbeispiel der Erfindung wird die Datenübermittlung dann getriggert, sobald sowohl eine erste als auch eine zweite Bedingung erfüllt sind.

Bei der ersten Bedingung kann es sich beispielsweise darum handeln, dass die gesammelte Energiemenge einen vorbestimmten Schwellwert überschritten hat. Ist dies der Fall und ist auch zusätzlich eine zweite Bedingung erfüllt, werden die Messwerte bzw. andere Daten übermittelt.

Bei der zweiten Bedingung kann es sich beispielsweise darum handeln, dass eine bestimmte, voreingestellte Zeitspanne seit einer vorhergehenden Datenübermittlung abgelaufen ist. Ist diese Zeitspanne abgelaufen, überprüft die Steuereinrichtung, ob ausreichend Energie vorhanden ist und triggert dann die Datenübermittlung. Auch kann es sich bei der zweiten Bedingung darum handeln, dass ein Fehlerzustand im Feldgerät aufgetreten ist. Ist ein solcher Zustand (oder ein anderer bestimmter, definierter Zustand) aufgetreten, wird überprüft, ob ausreichend Energie zur Verfügung steht und dann erfolgt die Datenübermittlung. Auch kann es sich bei der zweiten Bedingung darum handeln, dass ein bestimmter Messwert detektiert worden ist (durch die Messelektronik des Feldgeräts) bzw. dass ein detektierter Messwert eine bestimmte Schwelle über- oder unterschritten hat. Ist dies der Fall, erfolgt eine Datenübermittlung, falls ausreichend Energie hierfür zur Verfügung steht.

Natürlich kann die zur Verfügung stehende Energiemenge auch schon vorher gemessen worden sein, so dass die Daten sofort nach Feststellen der zweiten Bedingung übermittelt werden können.

Gemäß einem weiteren Ausführungsbeispiel der Erfindung weist die Steuereinrichtung eine Zeitsteuerung auf, die verhindert, dass die Datenübermittlung vor Ablauf einer programmierbaren, voreinstellbaren Zeit erneut getriggert wird.

Gemäß einem weiteren Ausführungsbeispiel der Erfindung ist ein Feldgerät mit einer oben und im Folgenden beschriebenen Steuereinrichtung angegeben.

Gemäß einem weiteren Ausführungsbeispiel der Erfindung weist das Feldgerät einen Energiespeicher zum Speichern der von dem Feldgerät gesammelten Energiemenge auf.

Bei dem Energiespeicher kann es sich beispielsweise um einen Akkumulator oder eine Kondensatorschaltung handeln.

Gemäß einem weiteren Ausführungsbeispiel der Erfindung weist das Feldgerät einen Energiewandler zum Sammeln von Energie aus der Umgebung des Feldgeräts auf. Es ist nicht erforderlich, dass das Feldgerät mit externen Energiequellen verbunden ist.

Bei dem Energiewandler handelt es sich beispielsweise um eine oder mehrere Solarzellen (Solarpanel) oder aber auch um ein Thermoelement zum sog. Thermo-Harvesting, bei dem eine Temperaturdifferenz in elektrische Energie umgewandelt wird. Auch kann es sich bei dem Energiewandler um eine Windkraftanlage handeln.

Gemäß einem weiteren Ausführungsbeispiel der Erfindung ist das Feldgerät als Füllstandmessgerät, Druckmessgerät, Grenzstandmessgerät oder Durchflussmessgerät ausgeführt.

Gemäß einem weiteren Ausführungsbeispiel der Erfindung ist das Feldgerät zum Einbau in einen Tank oder Lagerbehälter bzw. Silo ausgeführt.

Gemäß einem weiteren Ausführungsbeispiel der Erfindung ist das Feldgerät zur autarken Energieversorgung durch den Energiewandler bzw. die Energiewandler ausgeführt.

Gemäß einem weiteren Ausführungsbeispiel der Erfindung weist das Feldgerät weiterhin ein Kommunikationsmodul zur drahtlosen Kommunikation mit einer Zentrale auf.

Gemäß einem weiteren Ausführungsbeispiel der Erfindung ist ein Verfahren zur energiegesteuerten Datenübermittlung von einem Feldgerät an einen externen Empfänger angegeben, bei dem eine von dem Feldgerät gesammelte Energiemenge überwacht wird. Nachdem die gesammelte Energiemenge einen vorbestimmten Schwellwert überschritten hat, wird die Datenübermittlung getriggert.

Zusätzlich zu diesem Kriterium kann vorgesehen sein, dass noch andere Kriterien zum Triggern der Datenübermittlung erfüllt sein müssen. Beispielsweise kann es sich hierbei um den Ablauf einer bestimmten Zeit seit der letzten Datenübermittlung, das Über- oder Unterschreiten eines bestimmten Messwertes und/oder das Auftreten, eines bestimmten Zustandes im Feldgerät handeln.

Gemäß einem weiteren Ausführungsbeispiel der Erfindung ist ein Programmelement angegeben, das, wenn es auf einem Prozessor einer Steuereinrichtung für ein Feldgerät ausgeführt wird, den Prozessor anleitet, die oben und im Folgenden beschriebenen Schritte durchzuführen.

Gemäß einem weiteren Ausführungsbeispiel der Erfindung ist ein computerlesbares Medium angegeben, auf dem ein Programmelement gespeichert ist, das, wenn es auf einem Prozessor in der Steuereinrichtung für ein Feldgerät ausgeführt wird, den Prozessor anleitet, die oben und im Folgenden beschriebenen Schritte durchzuführen.

Das Programmelement kann z. B. Teil einer Software sein, die auf einem Prozessor der Feldgeräteelektronik gespeichert ist. Der Prozessor kann dabei ebenso Gegenstand der Erfindung sein. Weiterhin sind unter dem Begriff Programmelement auch solche Programmelemente zu verstehen, die schon von Anfang an die Erfindung verwenden, oder solche, die durch eine Aktualisierung (Update) ein bestehendes Programm zur Verwendung der Erfindung veranlassen.

Im Folgenden werden mit Verweis auf die Figuren Ausführungsbeispiele der Erfindung beschrieben.

### Kurze Beschreibung der Figuren

Fig. 1 zeigt eine Elektronikeinheit 109 für ein Feldgerät mit einer Steuereinrichtung gemäß einem Ausführungsbeispiel der Erfindung.
Fig. 2 zeigt Feldgeräte gemäß Ausführungsbeispielen der Erfindung.
Fig. 3 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich. In der folgenden Figurenbeschreibung werden für die gleichen oder ähnlichen Elemente die gleichen Bezugsziffern verwendet.

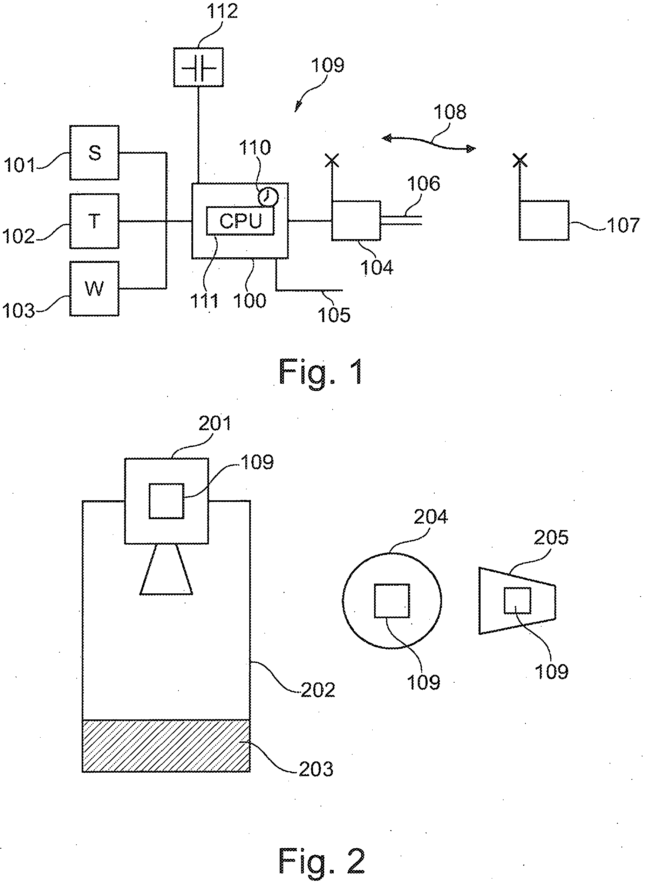

Fig. 1 zeigt eine Elektronikeinheit 109 für ein Feldgerät. Die Elektronikeinheit 109 weist eine Steuereinrichtung 100 zur energiegesteuerten Datenübermittlung an einen externen Empfänger 107 auf. Weiterhin sind mehrere Energiewandler 101, 102, 103 vorgesehen, die in Kombination miteinander oder wahlweise vorgesehen sein können.

Bei dem ersten Energiewandler 101 handelt es sich um ein Solarpanel, das mehrere Solarzellen aufweist. Bei dem zweiten Energiewandler 102 handelt es sich um ein Thermoelement, also eine Vorrichtung zum Umwandeln einer Temperaturdifferenz, die beispielsweise zwischen einem Bereich des Feldgeräts und der Umgebung vorliegt, in elektrische Energie. Bei dem dritten Energiewandler 103 handelt es sich um eine Windkraftanlage. Auch können andere Energiewandler vorgesehen sein, die das Feldgerät von externen Energieversorgungen unabhängig machen.

An der Steuereinrichtung 100 können verschiedene Schnittstellen vorgesehen sein, um die verschiedenen Energiewandler daran anzuschließen.

Weiterhin ist ein Energiespeicher 112 an die Steuereinrichtung 100 angeschlossen. Bei dem Energiespeicher 112 handelt es sich beispielsweise um einen Akkumulator und/oder eine Kondensatoranordnung.

Die Steuereinrichtung 100 weist eine Recheneinheit 111 auf, welche die beschriebenen Steuervorgänge ausführt. Weiterhin ist eine Zeitsteuerung 110 vorgesehen, die beispielsweise in der Steuereinrichtung 100 integriert ist und die verhindert, dass die Datenübermittlung vor Ablauf einer programmierbaren, vorbestimmten Zeit erneut getriggert wird.

An die Steuereinrichtung 100 ist über die Leitung 105 ein Feldgerätesensor anschließbar, der die gemessenen Messwerte an die Steuereinrichtung 100 leitet.

Auch ist eine weitere Schnittstelle vorgesehen, an welche das Kommunikationsmodul 104 angeschlossen werden kann. Hierbei handelt es sich beispielsweise um ein GSM-, GPRS- oder UMTS-Modem. Auch können andere drahtlose Übertragungstechniken verwendet werden, wie beispielsweise Bluetooth, WirelessHART oder WiMax. Das Kommunikationsmodul 104 dient der kabellosen Kommunikation mit einer externen Station 107. Hierfür ist die kabellose Kommunikationsstrecke 108 vorgesehen.

Auch können die Elektronik 109, und insbesondere das Kommunikationsmodul 104, so ausgeführt sein, dass der Anschluss an eine drahtgebundene Kommunikation erfolgen kann. Beispielsweise kann die Elektronik 109 (falls gewünscht) an eine Zweileiterschleife 106 angeschlossen werden.

Fig. 2 zeigt drei Feldgeräte gemäß Ausführungsbeispielen der Erfindung. Bei dem ersten Feldgerät 201 handelt es sich um ein Füllstandmessgerät, beispielsweise ein Füllstandradar. Das Füllstandmessgerät 201 weist die oben beschriebene Elektronik 109 mit der Steuereinrichtung 100 auf. Das Füllstandmessgerät 201 ist in einem Tank 202 eingebaut, der ein Füllgut 203 enthält.

Bei dem Feldgerät 204 handelt es sich um ein Druckmessgerät und bei dem Feldgerät 205 handelt es sich um ein Durchflussmessgerät. Jedes der Feldgeräte weist eine erfindungsgemäße Elektronik 109 auf.

Die Feldgeräte beziehen ihre Energie aus der Umgebung, z. B. durch Verwendung von Solarzellen oder durch Thermo-Harvesting oder durch eine Windkraftanlage. Die erfassten Messwerte werden über das Kommunikationsmodul 104 an eine übergeordnete Einheit 107 übertragen.

Da nicht vorhersehbar ist, wann genügend Energie für den Datenversand aus der Umgebung gesammelt ist, wird in das Feldgerät eine zusätzliche Steuereinrichtung implementiert. Die Steuereinrichtung überwacht die aus der Umgebung gesammelte Energiemenge und triggert bei Erreichen der für den Versand erforderlichen Energieschwelle den Datenversand über das Kommunikationsmodul. Die Steuereinrichtung 100 verfügt zudem über eine Zeitsteuerung, die verhindert, dass Daten zu oft versendet werden. Dies ermöglicht, dass sich im Energiespeicher genügend Energie sammeln kann, so dass auch in Zeiten, in denen keine Energie aus der Umgebung gesammelt werden kann, noch Daten in regelmäßigen Abständen versendet werden können.

Soll der Datenversand zeitgesteuert erfolgen, so muss gewährleistet sein, dass zu dem jeweiligen Zeitpunkt genügend Energie für den Datenversand zu Verfügung steht. Erfolgt der Datenversand ereignisgesteuert, so muss sogar jederzeit genügend Energie für den Datenversand zur Verfügung stehen, da nicht absehbar ist, wann ein Fehlerzustand im Feldgerät auftritt.

Soll die Energie aus der Umgebung bezogen werden, so ist beispielsweise ein Solarpanel oder ein anderer Energiewandler in der Größe derart dimensioniert, dass dem Energiebedarf des Feldgeräts Rechnung getragen wird.

Für manche Anwendungen ist es ausreichend, wenn in unregelmäßigen Abständen ein Messwert übermittelt wird. Dies ist beispielsweise bei der Überwachung von Lagertanks 202 der Fall.

Für diese Anwendung wird ein verhältnismäßig gering dimensionierter Energiewandler (beispielsweise in Form eines Solar Panels) eingesetzt, der für eine gewisse Zeit Energie aus der Umgebung sammelt. Sobald genügend Energie gesammelt und gespeichert wurde, startet die Steuereinrichtung das Feldgerät zur Ermittlung des aktuellen Messwerts. Anschließend wird der Messwertversand veranlasst.

Ein solch gering dimensioniertes Solar Panel ist nicht in der Lage, genügend Energie für den ständigen oder vorhersehbaren Betrieb des Feldgeräts und der Datenübermittlung zu liefern. Durch die Verwendung der erfindungsgemäßen Steuereinrichtung können wesentlich kleinere Energiewandler zur Versorgung des Feldgerätes eingesetzt werden. Die autarke Energieversorgung des Feldgeräts ist somit mit einfachen Mitteln möglich, ohne dass die Energiewandler eine entsprechende Größe aufweisen müssen.

Es ist auch nicht erforderlich, die Energiewandler bezüglich der abzugebenden Energie zu dimensionieren. Beispielsweise kann die Steuereinheit so eingestellt sein, dass Nachrichten und Messwerte höchstens dreimal am Tag verschickt werden.

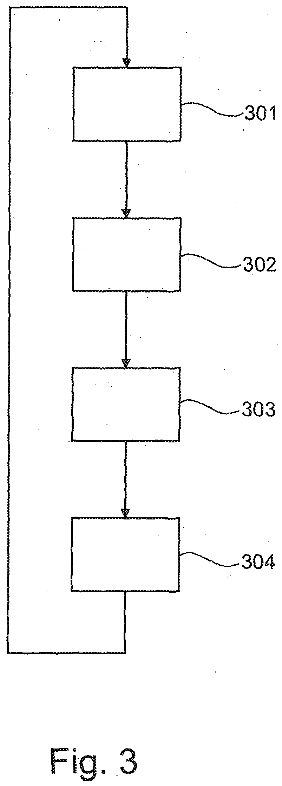

Fig. 3 zeigt ein Flussdiagramm eines Verfahrens gemäß einem Ausführungsbeispiel der Erfindung. In Schritt 301 erfolgt die Überwachung einer von dem Feldgerät (bzw. von einem Energiewandler des Feldgeräts) gesammelten Energiemenge. Wird in Schritt 302 festgestellt, dass die gesammelte Energiemenge einen bestimmten Schwellwert überschreitet, wird eine Messung getriggert. In Schritt 303 erfolgt dann die Übermittlung des Messwerts an einen externen Empfänger und in Schritt 304 wird der Energiespeicher im Feldgerät erneut geladen, woraufhin der Ladezustand des Energiespeichers wieder überwacht wird (Schritt 301).

Die dargestellten Verfahrensschritte können auch eine andere Reihenfolge aufweisen. Beispielsweise ist es möglich, dass der Ladezustand des Energiespeichers nur oder auch dann kontrolliert wird, wenn ein bestimmtes Ereignis eingetreten ist, beispielsweise der Ablauf einer bestimmten Zeit oder das Auftreten eines bestimmten Betriebszustands im Feldgerät.

Während den einzelnen Messungen kann sich die Steuereinheit in einem Ruhezustand befinden (Energiesparmodus).

Insbesondere ist es auch möglich, dass die Messung von extern getriggert wird. Beispielsweise kann ein Benutzer über ein Handgerät eine Messung anfordern, woraufhin die Steuereinheit kontrolliert, ob hierfür ausreichend Energie gesammelt wurde.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbei spiel beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Steuereinrichtung für ein Füllstandmessgerät, Druckmessgerät, Grenzstandmessgerät oder Durchflussmessgerät zur energiegesteuerten Datenübermittlung an einen externen Empfänger,
wobei die Steuereinrichtung (100) zur Überwachung einer von dem Füllstandmessgerät, Druckmessgerät, Grenzstandmessgerät oder Durchflussmessgerät gesammelten Energiemenge ausgeführt ist; und
wobei die Steuereinrichtung (100) zum Triggern der Datenübermittlung ausgeführt ist, nachdem die gesammelte Energiemenge einen vorbestimmten Schwellwert überschritten hat, eine voreingestellte Zeit seit einer vorhergehenden Datenübermittlung abgelaufen ist und ein bestimmter Zustand im Füllstandmessgerät, Druckmessgerät, Grenzstandmessgerät oder Durchflussmessgerät aufgetreten ist.

2. Steuereinrichtung nach Anspruch 1, wobei die Datenübermittlung dann getriggert wird, wenn ein Ereignis ausgewählt aus der Gruppe bestehend aus Auftreten eines Fehlerzustands im Füllstandmessgerät, Druckmessgerät, Grenzstandmessgerät oder Durchflussmessgerät, und Detektion eines bestimmten Messwertes durch das Füllstandmessgerät, Druckmessgerät, Grenzstandmessgerät oder Durchflussmessgerät aufgetreten ist.

3. Steuereinrichtung nach einem der vorhergehenden Ansprüche,
wobei die Steuereinrichtung (100) eine Zeitsteuerung (110) aufweist, die verhindert, dass die Datenübermittlung vor Ablauf einer programmierbaren Zeit erneut getriggert wird.

4. Füllstandmessgerät, Druckmessgerät, Grenzstandmessgerät oder Durchflussmessgerät (201, 204, 205) mit einer Steuereinrichtung nach einem der Ansprüche 1 bis 3.

5. Füllstandmessgerät, Druckmessgerät, Grenzstandmessgerät oder Durchflussmessgerät nach Anspruch 4, weiterhin aufweisend:
einen Energiespeicher (112) zum Speichern der von dem Füllstandmessgerät, Druckmessgerät, Grenzstandmessgerät oder Durchflussmessgerät (201, 204, 205) gesammelten Energiemenge.

6. Füllstandmessgerät, Druckmessgerät, Grenzstandmessgerät oder Durchflussmessgerät nach Anspruch 4 oder 5, weiterhin aufweisend:
einen Energiewandler (101, 102, 103) zum Sammeln von Energie aus einer Umgebung des Füllstandmessgeräts Druckmessgeräts, Grenzstandmessgeräts oder Durchflussmessgeräts.

7. Füllstandmessgerät, Druckmessgerät, Grenzstandmessgerät oder Durchflussmessgerät nach Anspruch 6,
wobei es sich bei dem Energiewandler (101, 102, 103) um ein Solarpanel, ein Thermoelement zum Umwandeln einer Temperaturdifferenz in elektrische Energie oder eine Windkraftanlage handelt.

8. Füllstandmessgerät, Druckmessgerät, Grenzstandmessgerät oder Durchflussmessgerät nach einem der Ansprüche 6 bis 7,
ausgeführt zur autarken Energieversorgung durch den Energiewandler.

9. Füllstandmessgerät, Druckmessgerät, Grenzstandmessgerät oder Durchflussmessgerät nach einem der Ansprüche 4 bis 8, weiterhin aufweisend:
ein Kommunikationsmodul (104) zur drahtlosen Kommunikation mit einer Zentrale (107).

10. Verfahren zur energiegesteuerten Datenübermittlung von einem Füllstandmessgerät, Druckmessgerät, Grenzstandmessgerät oder Durchflussmessgerät an einen externen Empfänger, das Verfahren aufweisend die Schritte:
Überwachung einer von dem Füllstandmessgerät, Druckmessgerät, Grenzstandmessgerät oder Durchflussmessgerät gesammelten Energiemenge; und
Triggern der Datenübermittlung, nachdem die gesammelte Energiemenge einen vorbestimmten Schwellwert überschritten hat, eine voreingestellte Zeit seit einer vorhergehenden Datenübermittlung abgelaufen ist und ein bestimmter Zustand im Füllstandmessgerät, Druckmessgerät, Grenzstandmessgerät oder Durchflussmessgerät aufgetreten ist.

11. Programmelement, das, wenn es auf einem Prozessor einer Steuereinrichtung für ein Füllstandmessgerät, Druckmessgerät, Grenzstandmessgerät oder Durchflussmessgerät ausgeführt wird, den Prozessor anleitet, die folgenden Schritte durchzuführen:
Überwachung einer von dem Füllstandmessgerät, Druckmessgerät, Grenzstandmessgerät oder Durchflussmessgerät gesammelten Energiemenge; und
Triggern einer Datenübermittlung von dem Füllstandmessgerät, Druckmessgerät, Grenzstandmessgerät oder Durchflussmessgerät an einen externen Empfänger, nachdem die gesammelte Energiemenge einen vorbestimmten Schwellwert überschritten hat, eine voreingestellte Zeit seit einer vorhergehenden Datenübermittlung abgelaufen ist und ein bestimmter Zustand im Füllstandmessgerät, Druckmessgerät, Grenzstandmessgerät oder Durchflussmessgerät aufgetreten ist.

12. Computerlesbares Medium, auf dem ein Programmelement gespeichert ist, das, wenn es auf einem Prozessor einer Steuereinrichtung für ein Füllstandmessgerät, Druckmessgerät, Grenzstandmessgerät oder Durchflussmessgerät ausgeführt wird, den Prozessor anleitet, die folgenden Schritte durchzuführen:
Überwachung einer von dem Füllstandmessgerät, Druckmessgerät, Grenzstandmessgerät oder Durchflussmessgerät gesammelten Energiemenge; und
Triggern einer Datenübermittlung von dem Feldgerät an einen externen Empfänger, nachdem die gesammelte Energiemenge einen vorbestimmten Schwellwert überschritten hat, eine voreingestellte Zeit seit einer vorhergehenden Datenübermittlung abgelaufen ist und ein bestimmter Zustand im Füllstandmessgerät, Druckmessgerät, Grenzstandmessgerät oder Durchflussmessgerät aufgetreten ist.

## Claims

1. Control apparatus for a fill level measurement device, a pressure measurement device, a limit level measurement device or a flow measurement device, intended for transmitting data to an external receiver in a manner controlled by energy, wherein the control apparatus (100) is designed to monitor an amount of energy collected by the fill level measurement device, the pressure measurement device, the limit level measurement device or the flow measurement device, and wherein the control apparatus (100) is designed to trigger the transmission of data once the amount of energy collected has exceeded a predetermined threshold value, a preset time period since a previous transmission of data has elapsed and a certain state has occurred in the fill level measurement device, the pressure measurement device, the limit level measurement device or the flow measurement device.

2. Control apparatus according to claim 1, wherein the transmission of data is triggered if an event occurs selected from the group consisting of the occurrence of an error state in the fill level measurement device, the pressure measurement device, the limit level measurement device or the flow measurement device, and the detection of a specific measurement value by means of the fill level measurement device, the pressure measurement device, the limit level measurement device or the flow measurement device.

3. Control apparatus according to either of the preceding claims, wherein the control apparatus (100) comprises a time controller (110) which stops the transmission of data being triggered again before a programmable time period has elapsed.

4. Fill level measurement device, pressure measurement device, limit level measurement device or flow measurement device (201, 204, 205) comprising a control apparatus according to any of claims 1 to 3.

5. Fill level measurement device, pressure measurement device, limit level measurement device or flow measurement device according to claim 4, further comprising:
an energy store (112) for storing the amount of energy collected by the fill level measurement device, the pressure measurement device, the limit level measurement device or the flow measurement device (201, 204, 205).

6. Fill level measurement device, pressure measurement device, limit level measurement device or flow measurement device according to either claim 4 or claim 5, further comprising:
an energy converter (101, 102, 103) for collecting energy from a region surrounding the fill level measurement device, the pressure measurement device, the limit level measurement device or the flow measurement device.

7. Fill level measurement device, pressure measurement device, limit level measurement device or flow measurement device according to claim 6, wherein the energy converter (101, 102, 103) is a solar panel, a thermocouple for converting a temperature difference into electrical energy, or a wind turbine.

8. Fill level measurement device, pressure measurement device, limit level measurement device or flow measurement device according to any of claims 6 to 7 which is designed to be independently supplied with energy by means of the energy converter.

9. Fill level measurement device, pressure measurement device, limit level measurement device or flow measurement device according to any of claims 4 to 8, further comprising:
a communication module (104) for wireless communication with a central unit (107).

10. Method for transmitting data from a fill level measurement device, a pressure measurement device, a limit level measurement device or a flow measurement device to an external receiver in a manner controlled by energy, said method comprising the steps of:
monitoring an amount of energy collected by the fill level measurement device, the pressure measurement device, the limit level measurement device or the flow measurement device; and
triggering the transmission of data once the amount of energy collected has exceeded a predetermined threshold value, a preset time period since a previous transmission of data has elapsed and a certain state has occurred in the fill level measurement device, the pressure measurement device, the limit level measurement device or the flow measurement device.

11. Program element which, when executed on a processor of a control apparatus for a fill level measurement device, a pressure measurement device, a limit level measurement device or a flow measurement device, instructs the processor to carry out the following steps:
monitoring an amount of energy collected by the fill level measurement device, the pressure measurement device, the limit level measurement device or the flow measurement device; and
triggering a transmission of data from the fill level measurement device, the pressure measurement device, the limit level measurement device or the flow measurement device to an external receiver once the amount of energy collected has exceeded a predetermined threshold value, a preset time period since a previous transmission of data has elapsed and a certain state has occurred in the fill level measurement device, the pressure measurement device, the limit level measurement device or the flow measurement device.

12. Computer-readable medium, on which a program element is stored which, when executed on a processor of a control apparatus for a fill level measurement device, a pressure measurement device, a limit level measurement device or a flow measurement device, instructs the processor to carry out the following steps:
monitoring an amount of energy collected by the fill level measurement device, the pressure measurement device, the limit level measurement device or the flow measurement device; and
triggering a transmission of data from the field device to an external receiver once the amount of energy collected has exceeded a predetermined threshold value, a preset time period since a previous transmission of data has elapsed and a certain state has occurred in the fill level measurement device, the pressure measurement device, the limit level measurement device or the flow measurement device.

## Revendications

1. Dispositif de commande pour un mesureur de niveau, un mesureur de pression, un mesureur de niveau limite ou un mesureur de débit pour une transmission de données commandée en énergie à un récepteur externe,
dans lequel le dispositif de commande (100) est adapté pour surveiller une quantité d'énergie collectée par le mesureur de niveau, le mesureur de pression, le mesureur de niveau limite ou le mesureur de débit, et
dans lequel le dispositif de commande (100) est adapté pour déclencher la transmission de données après que la quantité d'énergie collectée ait dépassé une valeur de seuil prédéterminée, qu'un temps préréglé se soit écoulé depuis une transmission de données précédente et qu'un état déterminé soit apparu dans le mesureur de niveau, le mesureur de pression, le mesureur de niveau limite ou le mesureur de débit.

2. Dispositif de commande selon la revendication 1, dans lequel la transmission de données est déclenchée dès l'apparition d'un événement choisi parmi le groupe constitué de l'apparition d'un état d'erreur dans le mesureur de niveau, le mesureur de pression, le mesureur de niveau limite ou le mesureur de débit, et la détection d'une valeur de mesure déterminée par le mesureur de niveau, le mesureur de pression, le mesureur de niveau limite ou le mesureur de débit.

3. Dispositif de commande selon l'une des revendications précédentes,
dans lequel le dispositif de commande (100) comporte une temporisation (110) qui empêche un nouveau déclenchement de la transmission de données avant l'expiration d'un temps programmable.

4. Mesureur de niveau, mesureur de pression, mesureur de niveau limite ou mesureur de débit (201, 204, 205) comportant un dispositif de commande selon l'une des revendications 1 à 3.

5. Mesureur de niveau, mesureur de pression, mesureur de niveau limite ou mesureur de débit selon la revendication 4, comportant en outre :
un accumulateur d'énergie (112) pour accumuler la quantité d'énergie collectée par le mesureur de niveau, le mesureur de pression, le mesureur de niveau limite ou le mesureur de débit (201, 204, 205).

6. Mesureur de niveau, mesureur de pression, mesureur de niveau limite ou mesureur de débit selon la revendication 4 ou 5, comportant en outre :
un convertisseur d'énergie (101, 102, 103) pour collecter de l'énergie provenant d'un environnement du mesureur de niveau, du mesureur de pression, du mesureur de niveau limite ou du mesureur de débit.

7. Mesureur de niveau, mesureur de pression, mesureur de niveau limite ou mesureur de débit selon la revendication 6,
dans lequel le convertisseur d'énergie (101, 102, 103) est un panneau solaire, un thermocouple pour convertir une différence de température en énergie électrique ou une éolienne.

8. Mesureur de niveau, mesureur de pression, mesureur de niveau limite ou mesureur de débit selon l'une des revendications 6 à 7, adapté pour l'auto-alimentation en énergie par le convertisseur d'énergie.

9. Mesureur de niveau, mesureur de pression, mesureur de niveau limite ou mesureur de débit selon l'une des revendications 4 à 8, comportant en outre :
un module de communication (104) pour une communication sans fil avec une centrale (107).

10. Procédé de transmission de données commandée en énergie d'un mesureur de niveau, d'un mesureur de pression, d'un mesureur de niveau limite ou d'un mesureur de débit à un récepteur externe, le procédé comportant les étapes consistant à :
surveiller une quantité d'énergie collectée par le mesureur de niveau, le mesureur de pression, le mesureur de niveau limite ou le mesureur de débit, et
déclencher la transmission de données après que la quantité d'énergie collectée ait dépassé une valeur de seuil prédéterminée, qu'un temps préréglé se soit écoulé depuis une transmission de données précédente et qu'un état déterminé soit apparu dans le mesureur de niveau, le mesureur de pression, le mesureur de niveau limite ou le mesureur de débit.

11. Elément de programme qui, lorsqu'il est exécuté sur un processeur d'un dispositif de commande pour un mesureur de niveau, un mesureur de pression, un mesureur de niveau limite ou un mesureur de débit, amène le processeur à exécuter les étapes suivantes consistant à :
surveiller une quantité d'énergie collectée par le mesureur de niveau, le mesureur de pression, le mesureur de niveau limite ou le mesureur de débit, et
déclencher une transmission de données du mesureur de niveau, du mesureur de pression, du mesureur de niveau limite ou du mesureur de débit à un récepteur externe, après que la quantité d'énergie collectée ait dépassé une valeur de seuil prédéterminée, qu'un temps préréglé se soit écoulé depuis une transmission de données précédente et qu'un état déterminé soit apparu dans le mesureur de niveau, le mesureur de pression, le mesureur de niveau limite ou le mesureur de débit.

12. Support lisible par ordinateur, sur lequel est enregistré un élément de programme qui, lorsqu'il est exécuté sur un processeur d'un dispositif de commande pour un mesureur de niveau, un mesureur de pression, un mesureur de niveau limite ou un mesureur de débit, amène le processeur à exécuter les étapes suivantes consistant à :
surveiller une quantité d'énergie collectée par le mesureur de niveau, le mesureur de pression, le mesureur de niveau limite ou le mesureur de débit, et
déclencher une transmission de donnés de l'appareil de terrain à un récepteur externe, après que la quantité d'énergie collectée ait dépassé une valeur de seuil prédéterminée, qu'un temps préréglé se soit écoulé depuis une transmission de données précédente et qu'un état déterminé soit apparu dans le mesureur de niveau, le mesureur de pression, le mesureur de niveau limite ou le mesureur de débit.
